# EUROPÄISCHE PATENTSCHRIFT

(11) **EP 0 772 879 B1**
(45) Veröffentlichungstag und Bekanntmachung des Hinweises auf die Patenterteilung: **06.05.1998**
(21) Anmeldenummer: 95926365.8
(22) Anmeldetag: 10.07.1995
(51) Int. Cl.: G21C 3/334

(54) **MIT HILFE VON ZAPFEN ZUSAMMENGESETZTES BRENNSTABBÜNDEL**
FUEL ROD ASSEMBLY PUT TOGETHER BY MEANS OF PEGS
FAISCEAU DE CRAYONS COMBUSTIBLES ASSEMBLES A L'AIDE DE TENONS

(30) Priorität: 22.07.1994 DE 4426136
(43) Veröffentlichungstag der Anmeldung: 14.05.1997
(73) Patentinhaber: SIEMENS AKTIENGESELLSCHAFT, 80333 München (DE)
(72) Erfinder: REISS, Thomas, D-91341 Röttenbach (DE); KRAUS, Kurt, D-91315 Höchstadt (DE)
(86) Internationale Anmeldenummer: DE9500898
(87) Internationale Veröffentlichungsnummer: WO9603752

(56) Entgegenhaltungen:
- EP-A- 0 142 778
- EP-A- 0 182 196
- EP-A- 0 550 868
- WO-A-94/00848
- DE-A- 2 824 265

## Beschreibung

Die Erfindung betrifft ein Kernreaktorbrennelement entsprechend dem Oberbegriff des Patentanspruchs 1.

Ein derartiges Kernreaktorbrennelement ist aus EP-B1-0 142 778 bekannt. Der starre Verbindungskörper zwischen Brennelementfuß und Brennelementkopf dieses Kernreaktorbrennelements ist ein mit Kernbrennstoff gefüllter Brennstab, der mit einem Ende am Brennelementkopf und mit dem anderen Ende am Brennelementfuß festgeschraubt ist. Auf der Oberseite des Brennelementkopfs steht in einer Ecke des Brennelementkastens ein Eckbolzen mit zur Längsrichtung des Brennelementkastens und den Längsachsen der Brennstäbe parallelen Längsachse. Auf dem Oberende dieses Eckbolzens liegt ein Quersteg auf, der sich innen in einer Ecke des Brennelementkastens befindet. Oben auf diesem Quersteg liegt das Winkelteil mit einem Scheitelsteg auf, der sich im Scheitel dieses Winkelteils befindet. Das Winkel teil ist mit einem zur Längsrichtung des Brennelementkastens und den Längsachsen der Brennelemente parallelen Schraubbolzen, der den Scheitelsteg des Winkelteils und den Quersteg durchgreift, an dem Eckbolzen auf dem Brennelementkopf festgeschraubt.

Ein Kernreaktorbrennelement welches ein Winkelteil mit Zapfen aufweist, die in entsprechende Fenster in der Seite des Brennelementkastens greifen, ist aus EP-A-0 182 196 bekannt.

Der Erfindung liegt die Aufgabe zugrunde, das bekannte Kernreaktorbrennelement weiterzubilden und das Abheben des Brennelementkopfs aus dem Brennelementkasten zu ermöglichen, ohne daß dieser Brennelementkasten vorher von den Brennstäben des Kernreaktorbrennelements abgezogen werden muß.

Zur Lösung dieser Aufgabe hat ein Kernreaktorbrennelement der eingangs erwähnten Art erfindungsgemäß die Merkmale des kennzeichnenden Teils des Patentanspruchs 1.

Dadurch kann der Quersteg vermieden werden, der innen in der Ecke des Brennelementkastens das Herausziehen des Brennelementkopfs aus dem Brennelementkasten verhindert. Ferner kann der Brennelementkasten am Brennelementfuß befestigt sein, ohne daß die Zugänglichkeit der Brennstäbe beeinträchtigt ist. Der Brennelementfuß ist dann nicht nur durch den starren Verbindungskörper - sei dieser nun ein mit Kernbrennstoff gefüllter Brennstab oder ein Rohr mit beliebigem Querschnitt zum Führen von nichtsiedendem Wasser in einem Kernreaktor - am Brennelementkopf gehaltert, sondern zusätzlich auch noch durch den Brennelementkasten, d.h. es kann eine redundante Halterung des Brennelementfußes am Brennelementkopf erzielt werden.

Der Brennelementfuß kann auch innen am Brennelementkasten lose abgestützt sein. Es ist dann sogar möglich, Brennelementkopf und Brennelementfuß zusammen mit den Brennstäben aus dem Kasten herauszuziehen. Trotzdem ist eine redundante Halterung des Brennelementfußes am Brennelementkopf beim komplett zusammengesetzten Kernreaktorbrennelement gegeben.

Die Erfindung und Ihre Vorteile seien anhand der Zeichnung an einem Ausführungsbeispiel näher erläutert:
- FIG 1: zeigt eine Draufsicht auf das Oberende eines erfindungsgemäßen Kernreaktorbrennelements.
- FIG 2: zeigt einen Längsschnitt durch das Kernreaktrobrennelement entsprechend der strichpunktierten Linie II-II in FIG 1.
- FIG 3: zeigt einen weiteren Längsschnitt durch das Kernreaktorbrennelement entsprechend der strichpunktierten Linie III-III in FIG 1.
- FIG 4: zeigt eine perspektivische Ansicht eines Winkelteils des Kernreaktorbrennelements nach den Figuren 1 bis 3.
- FIG 5: zeigt einen Längsschnitt entsprechend FIG 3 durch eine andere Ausführungsform des Kernreaktorbrennelements.
- FIG 6: zeigt einen Längsschnitt entsprechend FIG 2 durch eine andere Ausführungsform des Kernreaktorbrennelements

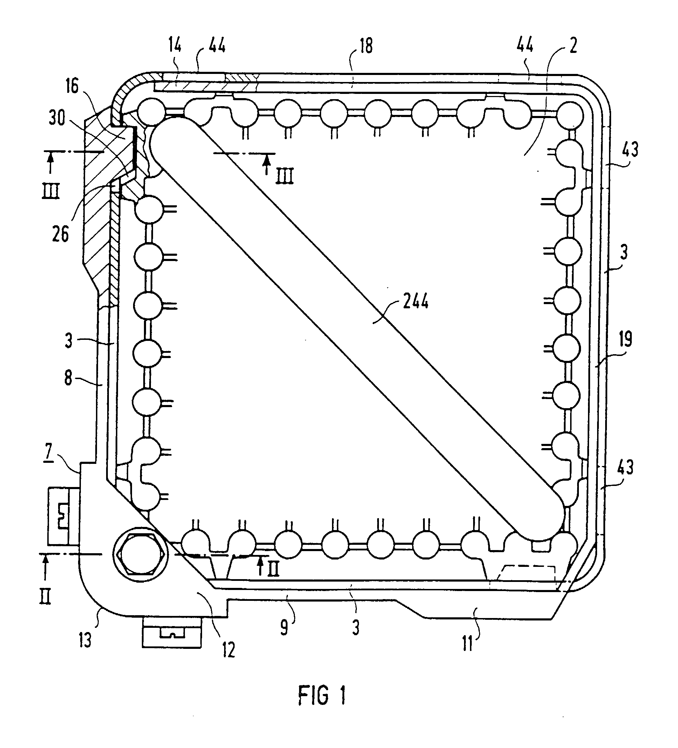

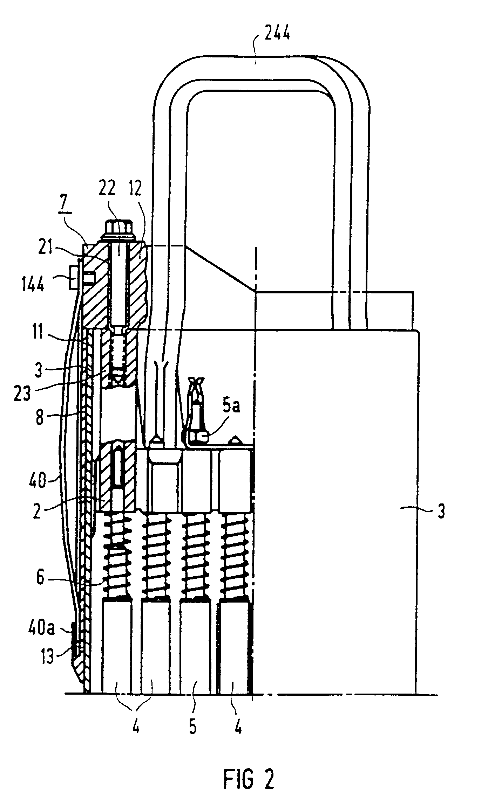

Ein Kernreaktorbrennelement nach den Figuren 1 bis 6 ist für einen Siedewasserkernreaktor bestimmt und hat einen Brennelementkopf 2 sowie einen langgestreckten Brennelementkasten 3 mit quadratischem Querschnitt, in dem sich der Brennelementkopf 2 am Oberende des Brennelementkastens 3 befindet. Das Unterende des Brennelementkastens 3 ist nicht dargestellt. An diesem Unterende befindet sich - ebenfalls nicht dargestellt - innerhalb des Brennelementkastens 3 ein Brennelementfuß, der an dem Unterende des Brennelementkastens 3 befestigt oder lose abgestützt sein kann. Die Oberseite des Brennelementkopfs 2 ist mit einem Haltegriff 244 versehen, der aus dem offenen Oberende des Brennelementkastens 3 herausragt.

Innerhalb des Brennelementkastens 3 zwischen Brennelementkopf 2 und Brennelementfuß befindliche, mit Kernbrennstoff gefüllte Brennstäbe 4 und 5 sind parallel zur Längsrichtung des langgestreckten Brennelementkastens 3. Diese Brennstäbe 4 und 5 sind nebeneinander angeordnet. Die Oberenden dieser Brennstäbe 4 und 5 greifen lose in Bohrungen im Brennelementkopf 2, und alle Brennstäbe 4 und 5 sind an den Oberenden gegen den Brennelementkopf 2 mit Schraubenfedern 6 abgestützt. In gleicher Weise sind die nicht erkennbaren Unterenden der Brennstäbe 4 und 5 in Durchführungen im nicht erkennbaren Brennelementfuß innerhalb des Brennelementkastens 3 geführt.

Einige Brennstäbe 5 durchgreifen den Brennelementkopf 2 und sind mit einer Mutter 5a am Brennelementkopf 2 festgeschraubt. Diese Brennstäbe 5 sind an ihrem anderen Ende jeweils in die ihnen zugeordneten Bohrungen im nicht dargestellten Brennelementfuß eingeschraubt.

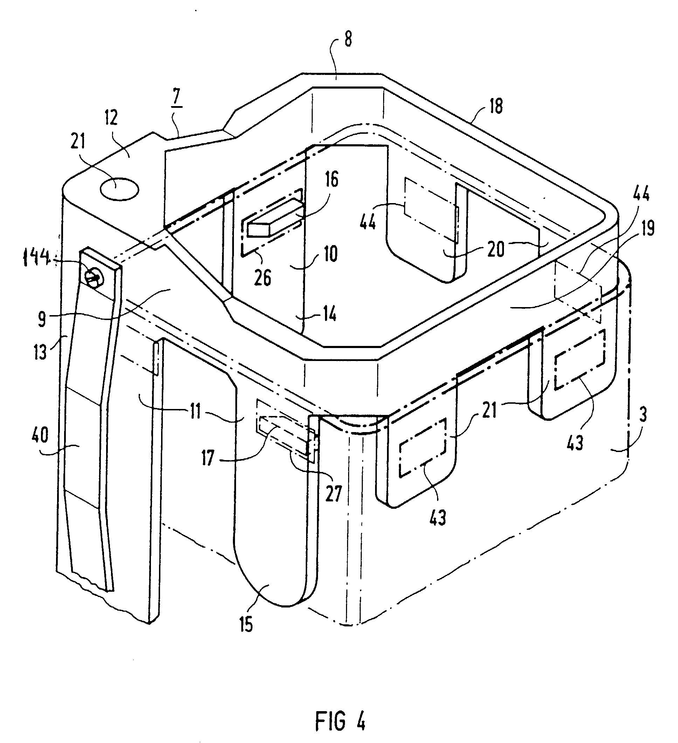

Wie insbesondere FIG 4 zeigt, weist ein Winkelteil 7 zwei zueinander rechtwinklige, gleichlange Schenkel 8 und 9 auf. An der Unterkante dieser Schenkel 8 und 9 befinden sich Wandungen 10 und 11, die zu einem Scheitelsteg 12 im Scheitel der Schenkel 8 und 9 und damit des Winkelteils 7 rechtwinklig sind. Die Wandungen 10 und 11 bilden am Scheitelsteg 12 ein zu den Schenkeln 8 und 9 rechtwinkliges langgestrecktes L-förmiges Profil 13, während sie an den Enden der Schenkel 8 und 9 jeweils zu einer starren Anlagezunge 14 und 15 ausgeformt sind.

An der Innenseite der starren Anlagezungen 14 und 15 ist jeweils ein starrer Zapfen 16 und 17 starr angebracht, der sich quer zur Längsrichtung der Anlagezunge 14 bzw. 15 erstreckt und der weder in dieser Längsrichtung noch quer zu dieser Längsrichtung am Winkelteil 7 bewegbar ist. Ein an den Enden der beiden Schenkel 8 und 9 ausgebildetes Winkelteil mit rechtwinklig zueinanderstehenden Zusatzschenkeln 18 und 19 ergänzt die Schenkel 8 und 9 zu einem Rahmen mit quadratischem Innen- und Außenquerschnitt. An der Unterkante dieser Zusatzschenkel 18 und 19 sind flache Anlagekörper 20 und 21 ausgebildet.

Außen am L-förmigen Profil 13 ist auf beiden Wandungen 10 und 11 je eine langgestreckte Blattfeder 40 in Richtung des L-förmigen Profils 13 angeordnet und jeweils an einem Ende mit einer Schraube 144 am Winkelteil 7 starr befestigt. Das andere Ende jeder Blattfeder 40 ist frei gleitend in einer Kulisse 40a an der Außenseite des L-förmigen Profils 13 an dessen Unterende geführt. Jede Blattfeder 40 ist in Querlinien so geknickt, daß sich diese Blattfeder 40 nach außen von der Außenseite des L-förmigen Profils 13 wegwölben.

Im Scheitelsteg 12 am Scheitel der Schenkel 8 und 9 befindet sich ferner eine zu den beiden Schenkeln 8 und 9 rechtwinklige, d.h. zu den Wandungen 10 und 11 parallele durchgehende Bohrung 21 für einen Schraubbolzen 22.

Mit diesem Schraubbolzen 22 ist das Winkelteil 7 an einem Stehbolzen 23 auf der Oberseite des Brennelementkopfs 2 festgeschraubt. Das Winkelteil 7 ist dem Brennelementkasten 3 so angepaßt, daß die Wandungen 10 und 11 des Winkelteils 7 jeweils außen an einer von zwei aufeinandertreffenden Seiten des Brennelementkastens 3 flach anliegen und die starren Zapfen 16 und 17 jeweils in ein Fenster 26 und 27 in einer dieser beiden Seiten des Brennelementkastens 3 und in eine Tasche 30 greifen, die sich seitlich im Brennelementkopf 2 unter dem Fenster 26 bzw. 27 befindet. Der Lastabtrag erfolgt über die starren Zapfen 16 und 17 in der jeweiligen Tasche im Brennelementkopf 2, so daß der Schraubbolzen 22 unbelastet sein kann.

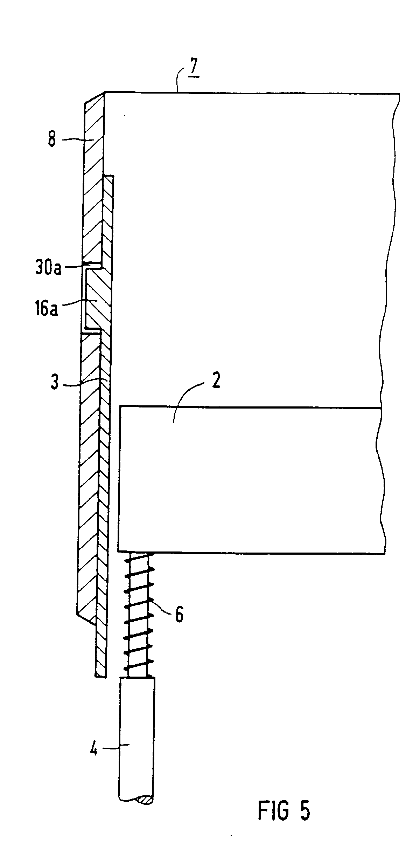

Wie in FIG 5 angedeutet, kann auch ein starrer Zapfen 16a starr außen an einer Seite des Brennelementkastens 3 angebracht sein und in eine Tasche 30a im Winkelteil 7 greifen.

Die flachen Anlagekörper 20 und 21 an den Zusatzschenkeln 18 und 19 des Winkelteils 7 greifen in den Brennelementkasten 3 und liegen dort innen jeweils an einer von zwei Gegenseiten des Brennelementkastens 3 an, die sich gegenüber den Seiten des Brennelementkastens 3 befinden, in die die starren Zapfen 16 und 17 greifen. Auf diese Weise können Fenster 43 und 44 abgedeckt werden, die zur möglichen Aufnahme starrer Zapfen eines Winkelteils in den beiden Gegenseiten des Brennelementkastens 3 vorgesehen sind.

Das Winkel teil 7 wird nach Einsetzen des Brennelementkopfs 2 in das Oberende des langgestreckten Brennelementkastens 3 zunächst in Längsrichtung dieses Brennelementkastens 3 auf dieses Oberende so aufgesetzt, daß sich die Anlagekörper 20 und 21 innerhalb des Brennelementkastens 3 und die Wandungen 10 und 11 samt dem langgestreckten L-förmigen Profil 13 außerhalb des Brennelementkastens 3 befinden. Sodann wird das Winkelteil 7 in Richtung der Diagonalen des quadratischen Querschnitts des Brennelementkastens 3, d.h. seitlich auf diesen Brennelementkasten 3 zu verschoben, so daß schließlich im wesentlichen die Bohrung 21 im Winkelteil 7 mit der Bohrung im Stehbolzen 23 auf der Oberseite des Brennelementkopfs 2 fluchtet und der Schraubbolzen 22 durch die Bohrung 21 hindurch in einer Längsbohrung dieses Stehbolzens 23 festgeschraubt werden kann. Die Wandungen 10 und 11 liegen satt an der Außenseite des Brennelementkastens 3 und die Anlagekörper 20 und 21 satt an der Innenseite des Brennelementkastens 3 an, und die starren Zapfen 16 und 17, sind in die Fenster 26 und 27 und in die unter diesen Fenstern befindlichen Taschen 30 seitlich im Brennelementkopf 2 eingepaßt, so daß eine ordnungsgemäße und überprüfbare Halteverbindung zwischen Winkelteil 7 einerseits und dem Brennelementkasten 3 sowie dem Brennelementkopf 2 andererseits aus geometrischen Gründen zwangsläufig hergestellt ist. Der Vorgang kann in umgekehrter Reihenfolge durchgeführt werden, wenn das Winkelteil 7 vom Brennelementkasten 3 wieder entfernt wird.

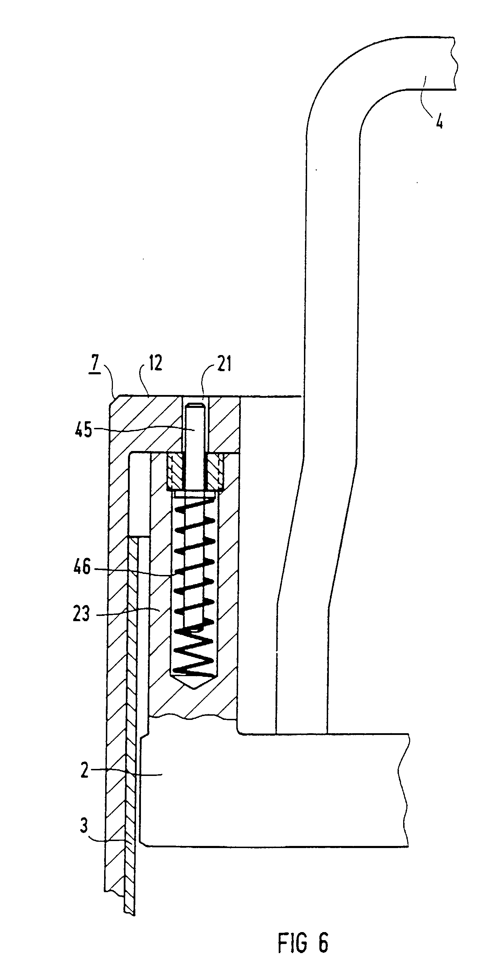

Wie in FIG 6 angedeutet, kann der Stehbolzen 23 auf der Oberseite des Brennelementkopfs 2 eine Längsbohrung in Längsrichtung des Brennelementkastens 3 aufweisen. In dieser Längsbohrung ist ein Verrastbolzen 45 gegen die Wirkung einer Rückstellfeder 46 in den Stehbolzen 23 und damit in den Brennelementkopf 2 verschiebbar angeordnet.

Beim Aufsetzen des Winkelteils 7 auf das Oberende des Brennelementkastens 3 kann der aus der Längsbohrung oben herausragende Verrastbolzen 45 mit dem Winkelteil 7 in den Stehbolzen 23 versenkt werden.

Beim Verschieben des Winkelteils 7 in Richtung der Diagonalen des Querschnitts des Brennelementkastens 3 rastet schließlich der Verrastbolzen 45 in die durchgehende Bohrung 21 im Winkelteil 7 ein, so daß das Winkelteil 7 spielfrei am Brennelementkasten 3 gehaltert ist. Zum Lösen des Winkelteils 7 vom Brennelementkasten 3 braucht nur der Verrastbolzen 45 mit einem Werkzeug durch die Bohrung 21 im Winkelteil 7 hindurch in die Längsbohrungen im Stehbolzen 23 hineingeschoben zu werden, so daß das Winkelteil 7 in Richtung der Diagonalen des Querschnitts des Brennelementkastens 3 zurückverschoben und schließlich vom Brennelemenkasten 3 abgehoben werden kann.

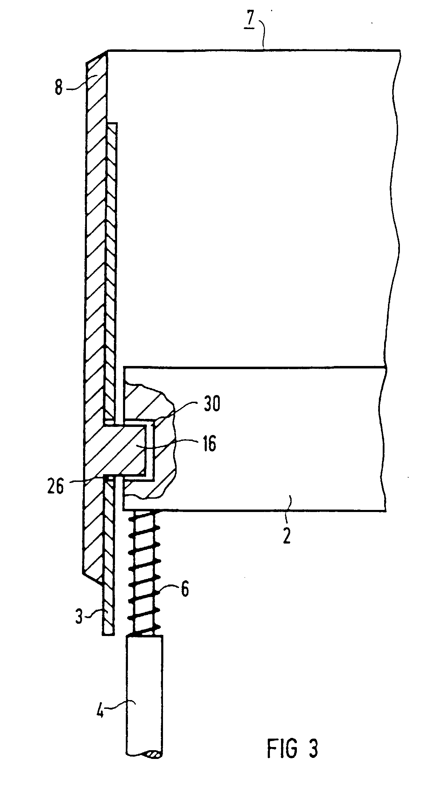

In einem Siedewasserkernreaktor werden, wie beispielsweise in der DE-A-28 24 265 und DE-A-30 27 562 beschrieben ist, jeweils vier Kernreaktorbrennelemente entsprechend Figur 3 in einer quadratischen Gittermasche eines Quergitters, des sogenannten oberen Kerngitters, angeordnet. Jedes dieser vier Kernreaktorbrennelemente befindet sich so in einer Ecke dieser Masche, daß die Ecken der Brennelementkästen 3 mit den Winkelteilen 7 im Zentrum der Masche angeordnet sind und sich dort jeweils zwei Blattfedern 20 seitlich benachbarter Kernreaktorbrennelemente gegeneinander abstützen. Die Brennelementkästen 3 der vier in derselben Masche des Kerngitters befindlichen Kernreaktorbrennelemente bilden einen spaltförmigen Zwischenraum mit kreuzförmigem Querschnitt, in den ein langgestreckter Steuerstab mit ebenfalls kreuzförmigem Querschnitt von den Unterenden dieser vier Kernreaktorbrennelemente her eingeschoben werden kann.

## Patentansprüche

1. Kernreaktorbrennelement mit einem langgestreckten Brennelementkasten (3), in dem sich an einem offenen Ende ein Brennelementkopf (2) und an einem anderen offenen Ende ein mit dem Brennelementkopf (2) durch einen starren Verbindungskörper (5) verbundener Brennelementfuß und zwischen Brennelementkopf (2) und Brennelementfuß Kernbrennstoff enhaltende Brennstäbe (4) befinden, sowie mit einem dem Brennelementkasten (3) angepaßten Winkelteil (7) mit zwei Schenkeln (8) und (9), das außen an zwei aufeinandertreffenden Seiten des Brennelementkastens (3) anliegt, wobei an mindestens einer der beiden Seiten des Brennelementkastens (3) ein starr am Winkelteil (7) angeordneter Zapfen (16, 17) in ein Fenster (26, 27) in der Seite des Brennelementkastens (3) und/oder ein starr an der Seite des Brennelementkastens (3) angeordneter Zapfen (16a) in eine Tasche (30a) im Winkelteil (7) greift, **dadurch gekennzeichnet,** daß der Winkelteil (7) am Brennelementkopf (2) mit einem Bolzen (22, 45) gehaltert ist, der sich am Scheitel der beiden Schenkel (8) und (9) befindet.

2. Kernreaktorbrennelement nach Anspruch 1,
**dadurch gekennzeichnet,** daß der Bolzen (45) ein Verrastbolzen ist, der am Brennelementkopf (2) in Längsrichtung des Brennelementkastens (3) gegen die Wirkung einer Rückstellfeder (46) in den Brennelementkopf (2) versenkbar angebracht ist und in Längsrichtung des Brennelementkastens (3) verschiebbar in eine durchgehende Bohrung (21) im Winkelteil greift.

3. Kernreaktorbrennelement nach Anspruch 1,
**dadurch gekennzeichnet,** daß das Winkelteil (7) einen Anlagekörper (20, 21) aufweist, der innen an einer Gegenseite des Brennelementkastens (3) anliegt, die sich gegenüber der Seite des Brennelementkastens (3) befindet, in die der Zapfen (16, 17) greift oder an der der Zapfen (16a) angeordnet ist.

4. Kernreaktorbrennelement nach Anspruch 3,
**dadurch gekennzeichnet,** daß der Anlagekörper (20, 21) eine Durchführung (43, 44) in der Gegenseite des Brennelementkastens abdeckt.

5. Kernreaktorbrennelement nach Anspruch 1,
**dadurch gekennzeichnet,** daß der Zapfen (16) am Winkelteil (7), der in die Seite des Brennelementkastens (3) greift, auch den Brennelementkopf (2) hintergreift.

6. Kernreaktorbrennelement nach Anspruch 5
**dadurch gekennzeichnet,** daß der Zapfen (16) in eine Tasche (30) am Brennelementkopf (2) greift.

## Claims

1. Nuclear reactor fuel element with an elongate fuel element casing (3), in which are located, at one open end, a fuel element head (2) and, at another open end, a fuel element foot connected to the fuel element head (2) by means of a rigid connecting body (5) and, between the fuel element head (2) and fuel element foot, fuel rods (4) containing nuclear fuel, and with an angled part (7) which is adapted to the fuel element casing (3) and has two legs (8) and (9) and which bears on the outside against two sides of the fuel element casing (3) which meet one another, on at least one of the two sides of the fuel element casing (3), a peg (16, 17) arranged rigidly on the angled part (7) engaging into a port (26, 27) in the side of the fuel element casing (3) and/or a peg (16a) arranged rigidly on the side of the fuel element casing (3) engaging into a pocket (30a) in the angled part (7), characterized in that the angled part (7) is retained on the fuel element head (2) by means of a bolt (22, 45) which is located at the vertex of the two legs (8) and (9).

2. Nuclear reactor fuel element according to Claim 1, characterized in that the bolt (45) is a locking bolt which is attached to the fuel element head (2) so as to be capable of being countersunk into the fuel element head (2) in the longitudinal direction of the fuel element casing (3) counter to the effect of a return spring (46) and which engages into a continuous bore (21) in the angled part so as to be displaceable in the longitudinal direction of the fuel element casing (3).

3. Nuclear reactor fuel element according to Claim 1, characterized in that the angled part (7) has a bearing body (20, 21) which bears on the inside against an opposite side of the fuel element casing (3) which is located opposite that side of the fuel element casing (3) into which the peg (16, 17) engages or on which the peg (16a) is arranged.

4. Nuclear reactor fuel element according to Claim 3, characterized in that the bearing body (20, 21) covers a bushing (43, 44) in the opposite side of the fuel element casing.

5. Nuclear reactor fuel element according to Claim 1, characterized in that that peg (16) on the angled part (7) which engages into the side of the fuel element casing (3) also engages behind the fuel element head (2).

6. Nuclear reactor fuel element according to Claim 5, characterized in that the peg (16) engages into a pocket (30) on the fuel element head (2).

## Revendications

1. Assemblage combustible de réacteur nucléaire, comportant un boîtier-canal (3) oblong d'assemblage combustible, dans lequel se trouve, à une extrémité ouverte, un sommet (2) de l'assemblage combustible et, à une autre extrémité ouverte, un pied de l'assemblage combustible relié au sommet (2) de l'assemblage combustible par une pièce (5) de liaison rigide et, entre le sommet (2) de l'assemblage combustible et le pied de l'assemblage combustible, des crayons (4) combustibles contenant du combustible nucléaire, et comportant une équerre (7) qui est adaptée au boîtier-canal (3) d'assemblage combustible, qui comporte deux branches (8) et 9) et qui s'applique à l'extérieur à deux faces contiguës du boîtier-canal (3) d'assemblage combustible et, au moins sur l'une des deux faces au boîtier-canal (3) d'assemblage combustible, un tenon (16, 17) monté fixe sur l'équerre (7) rentre dans une fenêtre (26, 27) ménagée sur la face du boîtier-canal (3) de l'assemblage combustible et/ou un tenon (16a) monté fixe sur la face du caisson (3) de l'assemblage combustible rentre dans une poche (30a) ménagée dans l'équerre (7), caractérisé en ce que l'équerre (7) est fixée au sommet (2) de l'assemblage combustible par un boulon (22, 45) qui se trouve au sommet des deux branches (8 et 9).

2. Assemblage combustible de réacteur nucléaire suivant la revendication 1, caractérisé en ce que le boulon (45) est un boulon d'arrêt, qui est monté sur le sommet (2) de l'assemblage combustible de manière à pouvoir être abaissé dans le sommet (2) de l'assemblage combustible dans la direction longitudinale du boîtier-canal (3) de l'assemblage combustible, à l'encontre de l'action d'un ressort (46) de rappel et qui pénètre, en coulissant dans la direction longitudinale du boîtier-canal (3) de l'assemblage combustible, dans un perçage (21) continu ménagé dans l'équerre.

3. Assemblage combustible de réacteur nucléaire suivant la revendication 1, caractérisé en ce que l'équerre (7) comporte un élément (20, 21) de butée, qui s'applique intérieurement à une face opposée du boîtier-canal (3) de l'assemblage combustible qui se trouve en face de la face du boîtier-canal (3) de l'assemblage combustible, dans laquelle rentre les tenons (16, 17) ou sur laquelle les tenons (16a) sont montés.

4. Assemblage combustible de réacteur nucléaire suivant la revendication 3, caractérisé en ce que l'élément (20, 21) de butée recouvre une traversée (43, 44) ménagée dans la face opposée du boîtier-canal de l'assemblage combustible.

5. Assemblage combustible de réacteur nucléaire suivant la revendication 1, caractérisé en ce que le tenon (16), qui est ménagé sur l'équerre (7) et qui rentre dans la face du boîtier-canal (3) de l'assemblage combustible, s'accroche aussi derrière le sommet (2) de l'assemblage combustible.

6. Assemblage combustible de réacteur nucléaire suivant la revendication 5, caractérisé en ce que le tenon (16) rentre dans une poche (30) ménagée dans le sommet (2) de l'assemblage combustible.
